# EUROPÄISCHE PATENTANMELDUNG

(11) **EP 2 030 688 A1**
(43) Veröffentlichungstag der Anmeldung: **04.03.2009**
(21) Anmeldenummer: 07015903.3
(22) Anmeldetag: 13.08.2007
(51) Int. Cl.: B01L 3/14, G01N 35/00

(54) **Verschlussanordnung mit Balg**

(71) Anmelder: Hamilton Bonaduz AG, CH-7402 Bonaduz (CH)
(72) Erfinder: Nay, Renato, 7425 Masein (CH); Pochert, Jörg, 7000 Chur (CH)
(74) Vertreter: Trossin, Hans-Jürgen

(57) **Zusammenfassung**

Eine Verschlussanordnung (16) für ein Behältnis (10) weist einen ersten Hohlraum (8) zur Aufbewahrung von Substanzen auf und umfasst ein Deckelelement (18), das in eine mit dem ersten Hohlraum (8) in Verbindung stehende Öffnung (14) des Behältnisses (10) einsetzbar ist, wobei das Deckelelement (18) in Fluidverbindung mit einem zweiten Hohlraum (44) bringbar ist, in dem ein vom ersten Hohlraum (8) verschiedener Druck erzeugbar ist und wobei das in die Öffnung (14) eingesetzte Deckelelement (18) nach Maßgabe der Druckdifferenz zwischen dem ersten Hohlraum (8) und dem zweiten Hohlraum (44) zwischen einer Verschlussstellung, in der es die Öffnung (14) verschließt, und wenigstens einer Freigabestellung überführbar ist.

## Beschreibung

Die vorliegende Erfindung betrifft eine Verschlussanordnung für ein Behältnis, welches einen ersten Hohlraum zur Aufbewahrung von Substanzen aufweist. Die Verschlussanordnung umfasst ein Deckelelement, das in eine mit dem ersten Hohlraum in Verbindung stehende Öffnung des Behältnisses einsetzbar ist.

Zur Analyse und Behandlung von Substanzen, insbesondere im biochemischen Bereich zur Aufbewahrung von biochemischen Flüssigkeiten, die häufig in flüssigem Stickstoff gelagert werden müssen, aber auch anderen bei der Probenbehandlung eingesetzten flüssigen Substanzen, werden besonders ausgebildete Behältnisse zur Aufbewahrung der zu behandelnden Substanzen bzw. Flüssigkeiten benötigt. Vor allem bei modernen vollautomatisch arbeitenden Vorrichtungen, die beispielsweise immer mehr zur vollautomatischen Analyse bzw. Behandlung von Flüssigkeiten eingesetzt werden, besteht Bedarf nach Behältnissen, welche vollautomatisch geöffnet und verschlossen werden können, ohne dass manuelle Eingriffe erforderlich wären. Die derzeit gängigsten Verschlusssysteme, beispielsweise Röhrchenverschlusssysteme für zylindrische Behältnisse, in denen Flüssigkeiten aufbewahrt werden, benutzen durch einen zusätzlichen Scheibenring gedichtete Schraubdeckel oder aber ganz aus Scheiben bestehende Pfropfendeckel. Diese Verschlusssysteme sind wegen der erforderlichen Drehbewegungen bzw. des Umgangs mit weichelastischen Pfropfen nur aufwändig automatisierbar.

Es sind derzeit noch keine befriedigenden Verschlussanordnungen bekannt, da alle herkömmlich bekannten Verschlusssysteme wie die oben beschriebenen so aufgebaut sind, dass zum Öffnen und Schließen entweder tatsächlich manuelle Operationen nötig sind oder aber aufwändige mechanische Vorrichtungen erforderlich sind, um diese manuellen Operationen zu automatisieren.

Ein Beispiel für heute gerade im biochemischen Bereich zur Behandlung bzw. Analyse von Flüssigkeiten häufig Verwendung findende weitgehend automatisiert arbeitende Vorrichtungen sind Pipettierroboter. Heutige Pipettierroboter verfügen über eine Vielzahl von Pipettierkanälen, die nebeneinander an einem gemeinsamen Arm des Pipettierroboters angeordnet sind. So kann durch Manipulation des Roboterarms eine Vielzahl von Flüssigkeitsproben parallel und unabhängig voneinander pipettiert werden. Voraussetzung ist allerdings, dass für jeden Pipettierkanal die zu pipettierende Flüssigkeit in einem nach oben offenen Behältnis bereitsteht. Da Flüssigkeitsproben in der Regel in geschlossenen Behältnissen aufbewahrt werden, die für den Fall, dass die Probe in flüssigem Stickstoff zu lagern ist, auch noch bis zu entsprechend tiefen Temperaturen dicht schließen müssen, ist somit eine bislang zeitraubende Vorbehandlung der Flüssigkeitsproben erforderlich, bevor der Pipettierroboter seine vollautomatische Arbeit beginnen kann.

Aufgabe der vorliegenden Erfindung ist es daher, eine Verschlussanordnung für ein Behältnis mit einem Hohlraum zur Aufbewahrung von Substanzen bereitzustellen, welche ein möglichst einfaches Öffnen und Verschließen des Behältnisses auf vollautomatisiertem Wege ermöglicht.

Diese Aufgabe wird erfindungsgemäß gelöst durch eine Verschlussanordnung für ein Behältnis, welches einen ersten Hohlraum zur Aufbewahrung von Substanzen aufweist, umfassend ein Deckelelement, das in eine das in eine mit dem ersten Hohlraum in Verbindung stehende Öffnung des Behältnisses einsetzbar ist, wobei das Deckelelement in Fluidverbindung mit einem zweiten Hohlraum bringbar ist, in dem ein vom ersten Hohlraum verschiedener Druck erzeugbar ist, und wobei das in die Öffnung eingesetzte Deckelelement sich nach Maßgabe der Druckdifferenz zwischen dem ersten Hohlraum und dem zweiten Hohlraum zwischen einer Verschlussstellung, in der es die Öffnung verschließt, und wenigstens einer Freigabestellung überführbar ist.

Die Erfindung geht also ab von dem bislang verfolgten Weg, Behältnisse zur Aufbewahrung von Substanzen durch ein rein mechanisch arbeitendes Verschlusssystem zu verschließen. Stattdessen stellt die Erfindung eine Verschlussanordnung bereit, welche nach Maßgabe einer Druckdifferenz zwischen zwei durch ein Deckelelement voneinander getrennten Hohlräumen betätigbar ist. Diese Verschlussanordnung ist damit in idealer Weise zur Anwendung mit Pipettiervorrichtungen geeignet, bei denen das Aufnehmen und Abgeben von Flüssigkeiten ebenfalls mit Hilfe eines in einem jeweiligen Pipettierkanal erzeugten Unterdrucks bzw. Überdrucks erfolgt.

Der erste Hohlraum ist derjenige Hohlraum des Behältnisses, in welchem die Substanz aufbewahrt wird. Diese Substanz ist bevorzugt eine Flüssigkeit, insbesondere eine biochemische Flüssigkeit. Die Substanz wird durch eine in der den ersten Hohlraum umgebenden Wand ausgebildete Öffnung in den ersten Hohlraum eingebracht bzw. umgekehrt aus diesem entfernt. Diese Öffnung ist in der Verschlussstellung durch das Deckelelement verschlossen, wobei der Verschluss je nach Bedarf entweder luftdicht sein kann oder so sein kann, dass auch in der Verschlussstellung noch ein gewisser Luftaustausch zwischen dem ersten Hohlraum und der Umgebung möglich ist. Jedoch kann in der Verschlussstellung das Deckelelement nicht aus der Öffnung entfernt werden. Dies wird bevorzugt durch eine geeignete mechanische Kopplung zwischen einem Randabschnitt des Deckelelements und einem die Öffnung umgebenden Randabschnitt des Behältnisses gewährleistet.

Um das Deckelelement aus der Öffnung zu entfernen, muss es in eine Freigabestellung überführt werden, in welcher die Kopplung zwischen dem Deckelelement und dem Rand der Öffnung aufgehoben ist. Erfindungsgemäß wird dies dadurch erreicht, dass die vom ersten Hohlraum abgewandte Seite des Deckelelements in Fluidverbindung mit einem zweiten Hohlraum gebracht wird, in welchem ein von dem ersten Hohlraum verschiedener Druck erzeugbar ist, so dass eine Druckdifferenz zwischen dem ersten Hohlraum und dem zweiten Hohlraum entsteht. Das Deckelelement ist so ausgebildet, dass es in Reaktion auf diese Druckdifferenz seine Lage ändert und von der Verschlussstellung in eine Freigabestellung übergeht. Der zweite Hohlraum kann durch das Deckelelement selbst gebildet sein, in der Regel wird es jedoch günstiger sein, den zweiten Hohlraum in einem Betätigungsglied vorzusehen, welches zum Öffnen bzw. Schließen des Deckelelements mit demselben derart gekoppelt ist, dass die vom ersten Hohlraum abgewandte Seite des Deckelelements mit dem zweiten Hohlraum in Fluidkontakt kommt. Es bietet sich an, dass das Betätigungsglied das freie Ende eines zum Pipettieren von Flüssigkeiten verwendeten Pipettierkanals umfasst, welches normalerweise mit einer Pipettenspitze gekoppelt wird, um in Reaktion auf Unterdruck/Überdruck im Pipettierkanal Flüssigkeiten anzusaugen bzw. abzugeben. Es versteht sich, dass die Fluidverbindung häufig eine Luftverbindung sein wird.

Die Betätigung des Deckelelements, um dieses von seiner Verschlussstellung in seine Freigabestellung zu überführen, erfolgt erfindungsgemäß nach Maßgabe einer Druckdifferenz zwischen dem ersten Hohlraum und dem nach Ankoppeln des Betätigungsglieds mit der vom ersten Hohlraum abgewandten Seite des Deckelelements in Fluidverbindung stehenden zweiten Hohlraum. Diese Betätigung kann grundsätzlich sowohl in Reaktion auf einen Überdruck in dem zweiten Hohlraum gegenüber dem ersten Hohlraum erfolgen als auch in Reaktion auf einen Unterdruck in dem weiten Hohlraum gegenüber dem ersten Hohlraum erfolgen. In vielen Fällen wird es vorteilhafter sein, die Überführung des Deckelelements von seiner Verschlussstellung in seine Freigabestellung nach Maßgabe eines Unterdrucks im zweiten Hohlraum gegenüber dem ersten Hohlraum durchzuführen, weil dann in der Regel im zweiten Hohlraum auch gegenüber dem Umgebungsdruck Unterdruck herrscht und das Deckelelement somit sicher an der Verschlussanordnung gehalten bleibt.

Grundsätzlich wird in der Regel nur eine Freigabestellung vorgesehen sein, in welcher das Deckelelement seine Lage so geändert hat, dass es durch entsprechende Bewegung des Betätigungsglieds aus der Öffnung entnommen werden kann. Es ist aber durchaus denkbar, mehrere Freigabestellungen vorzusehen, beispielsweise dann, wenn das Deckelelement in der Verschlussstellung luftdicht gegenüber der Umgebung an einem die Öffnung umgebenden Rand des Behältnisses anliegt. Dann kann beispielsweise eine erste Freigabestellung vorgesehen sein, in welcher zwar Luft zwischen dem ersten Hohlraum und der Umgebung ausgetauscht werden kann, jedoch das Deckelelement noch nicht abgenommen werden kann, sowie eine zweite Freigabestellung vorgesehen sein, in der schließlich das Deckelelement entfernt werden kann.

Um in der Verschlussstellung einen luftdichten Abschluss der ersten Öffnung gegenüber der Umgebung zu erreichen, kann vorgesehen sein, dass das Deckelelement eine Dichtlippe umfasst, die in der Verschlussstellung in dichtende Anlage mit einem um die Öffnung umlaufenden Dichtrand des Behältnisses bringbar ist. Damit kann auch bei tiefe Temperaturen, wie sie bei Lagerung des Behältnisses in flüssigem Stickstoff herrschen, noch ein ausreichend dichter Verschluss der Öffnung erzielt werden.

Die Überführung des Deckelelements zwischen der Verschlussstellung und der Freigabestellung erfolgt bevorzugt durch Deformation des Deckelelements in Reaktion auf die Erzeugung einer Druckdifferenz zwischen dem ersten und dem zweiten Hohlraum, und zwar derart, dass das Deckelelement seinen Querschnitt nach Maßgabe der Druckdifferenz soweit verkleinert, dass das Deckelelement an einem den kleinsten Querschnitt der Öffnung definierenden Rand vorbei bewegt werden kann. Diese Ausgestaltung bietet insbesondere den Vorteil, dass dann, wenn keine Druckdifferenz zwischen dem ersten und dem zweiten Hohlraum herrscht, also beispielsweise beide Hohlräume mit der Umgebung in Luftkontakt stehen, bzw. die vom ersten Hohlraum abgewandte Seite des Deckelelements zur Umgebung hin offen ist, das Deckelelement sich in seiner Verschlussstellung befindet. Das Behältnis kann so, ohne besondere Vorkehrungen treffen zu müssen, auch über längere Zeiträume hinweg in einem geschlossenen Zustand aufbewahrt werden und muss lediglich zum Öffnen mit einer Vorrichtung gekoppelt werden, die auf der vom ersten Hohlraum abgewandten Seite des Deckelelements einen Überdruck oder Unterdruck gegenüber dem Druck im ersten Hohlraum erzeugt.

In einer bevorzugten Ausführungsform weist die Öffnung einen Rand auf, der einen zur Mitte der Öffnung vorstehenden Vorsprung bildet, an dessen dem ersten Hohlraum zugewandter Innenseite in der Verschlussstellung ein Randabschnitt des Deckelelements anliegt. Bevorzugt ist der Vorsprung in Umfangsrichtung um den Rand der Öffnung umlaufend ausgebildet. Der Vorsprung verhindert, dass das Deckelelement, wenn es einmal seine Verschlussstellung eingenommen hat, aus der Öffnung nach außen herausfallen kann. Damit das Deckelelement in der Verschlussstellung nicht in den Hohlraum hineinfallen kann, kann beispielsweise ein weiterer Vorsprung vorgesehen sein, der gegenüber dem ersten Vorsprung weiter innen liegt und an dessen äußerer Seite die dem Hohlraum zugewandte Innenseite des Deckelelements anliegt, oder es kann an der vom ersten Hohlraum abgewandten Seite des Deckelelements ein Bügelelement vorgesehen sein, das mit der Außenwand des Behältnisses zusammenwirkt.

Um eine ausreichende Deformation des Deckelelements in Reaktion auf eine Druckdifferenz zwischen dem ersten Hohlraum und dem zweiten Hohlraum zu erreichen, ist es günstig, wenn das Deckelelement eine Dichtmembran aus einem weichelastischen Kunststoffmaterial umfasst. Das Kunststoffmaterial kann beispielsweise ausgewählt sein aus der Gruppe umfassend Naturkautschuk, synthetischer Kautschuk, insbesondere Silikonkautschuk, thermoplastische Elastomere und Mischungen derselben. Die weichelastische Dichtmembran wird sich nämlich bei Ausbildung einer Druckdifferenz zwischen dem ersten Hohlraum und dem zweiten Hohlraum zu der Seite hin verformen, in welcher Unterdruck herrscht. Dabei dehnt sie sich nicht nur aus, sondern durch entsprechende Formgebung der Dichtmembran kann dafür gesorgt werden, dass sich auch ihr die Öffnung überdeckender Querschnitt in ausreichendem Maße verkleinert. Die elastischen Eigenschaften der genannten Materialien sorgen darüber hinaus dafür, dass die Verformung der Dichtmembran genau so lange anhält, wie die Druckdifferenz herrscht und sich nach erfolgtem Druckausgleich zwischen dem ersten und dem zweiten Hohlraum sich die Dichtmembran wieder in ihre Ursprungslage (die bei in die Öffnung eingesetztem Deckelelement der Verschlussstellung entspricht) zurückstellt.

In bevorzugter Ausgestaltung ist weiterhin vorgesehen, dass die Verschlussanordnung ein Verschlussgehäuse umfasst, an dem das Deckelelement angebracht ist, wobei das Deckelelement über einen von dem Verschlussgehäuse umschlossenen Raum in Fluidverbindung mit dem zweiten Hohlraum bringbar ist. Das Verschlussgehäuse ist dabei bevorzugt aus einem harten Material, insbesondere einem harten Kunststoffmaterial hergestellt. Unter einem harten Material soll hierbei ein Material verstanden werden, welches bei Erzeugung einer Druckdifferenz zwischen dem ersten und dem zweiten Hohlraum seine Form nicht ändert. Als Materialien für das Verschlussgehäuse kommen insbesondere Polyethylen (PE), Polypropylen (PP), Polyamid (PA) oder Mischungen derselben in Frage.

Das Verschlussgehäuse dient insbesondere der Ankopplung eines Betätigungsglieds zum Überführen des Deckelelements von seiner Verschlussstellung in seine Freigabestellung. Ein solches Betätigungsglied kann insbesondere ein Pipettierkopf einer Pipettiervorrichtung sein. Ein solcher Pipettierkopf lässt sich mit der Verschlussanordnung derart koppeln, dass die von dem ersten Hohlraum abgewandte Seite des Deckelelements in Fluidkontakt mit einem in dem Pipettierkopf ausgebildeten Pipettierkanal gelangt. Der Pipettierkanal stellt somit einen zweiten Hohlraum im Sinne der Erfindung dar. Man kann dies auch so ausdrücken, dass nach erfolgter Ankopplung des Betätigungsglieds an dem Verschlussgehäuse der zweite Hohlraum sich von dem Betätigungsglied ausgehend über einen vom Verschlussgehäuse umschlossenen Raum bis zu der vom ersten Hohlraum abgewandten Seite des Deckelelements erstreckt. Da das Verschlussgehäuse bevorzugt aus einem harten Material hergestellt ist, behält es unabhängig von einer eingestellten Druckdifferenz zwischen dem ersten und dem zweiten Hohlraum seine Form unverändert bei und sorgt daher für eine sichere Ankopplung bzw. Abkopplung des Betätigungsglieds von der Verschlussanordnung sowie für ein sauberes Aufsetzen bzw. Abheben der Verschlussanordnung auf die bzw. von der Öffnung zum ersten Hohlraum.

Zur Ankopplung der Verschlussanordnung an ein Betätigungsglied, insbesondere ein Betätigungsglied einer Flüssigkeitsdosiervorrichtung, kann vorgesehen sein, dass das Verschlussgehäuse eine zu einer von dem Deckelelement abgewandten Seite hin offene Aufnahme umschließt, in die das Betätigungsglied einfahrbar ist. Die Aufnahme weist hierbei eine Koppelanordnung auf, durch die das Betätigungsglied in der Aufnahme fluiddicht fixierbar und in der oben genannten Weise eine Fluidverbindung zwischen dem zweiten Hohlraum und der vom ersten Hohlraum abgewandten Seite des Deckelelements verstellbar ist. Wie oben bereits angesprochen, dient als Betätigungsglied bevorzugt ein Pipettierkopf einer Pipettiervorrichtung, welcher wenigstens einen Pipettierkanal trägt, auf den normalerweise eine Pipettenspitze aufgesetzt wird. Dies bietet sich insbesondere deswegen an, weil bei Pipettiervorrichtungen jeder Pipettierkanal mit einer Vorrichtung zur Erzeugung eines Unterdrucks oder Überdrucks in dem Pipettierkanal versehen ist.

Um das Deckelelement an dem Verschlussgehäuse anzubringen, kann eine Eingriffsanordnung vorgesehen sein, welche eine erste Eingriffsstruktur umfasst, die an einem Koppelabschnitt des Deckelelements ausgebildet ist, und eine zweite Eingriffsstruktur umfasst, die an dem Verschlussgehäuse ausgebildet ist. Die Eingriffsstrukturen sind dabei derart ausgebildet, dass nach Anbringung des Deckelelements an dem Verschlussgehäuse die erste Eingriffsstruktur in fluiddichtem Eingriff mit der zweiten Eingriffsstruktur steht. Der fluiddichte Eingriff sollte hierbei wenigstens in der Verschlussstellung des Deckelelements und bis hin zu einer Druckdifferenz zwischen dem ersten und dem zweiten Hohlraum und der ggf. damit verbundenen Deformation des Deckelelements aufrecht erhalten bleiben, so dass das Deckelelement zuverlässig aus der Öffnung entnommen werden kann. Der Koppelabschnitt kann beispielsweise dadurch realisiert sein, dass das Deckelelement, wenigstens in einem Zustand, in dem das Deckelelement in die Öffnung eingesetzt ist, einen um die Öffnung umlaufenden Mantelabschnitt umfasst, wobei die ersten Eingriffsstruktur an einem Innenumfang des Mantelabschnitts ausgebildet ist und die zweite Eingriffsstruktur am Außenumfang eines in den Mantelabschnitt eingesetzten Koppelabschnitts des Verschlussgehäuses ausgebildet ist. Zur Ausbildung der Fluidverbindung zwischen der dem ersten Hohlraum abgewandten Seite des Deckelelements und dem zweiten Hohlraum ist es hierbei günstig, wenn ferner der Koppelabschnitt des Verschlussgehäuses einen mit dem zweiten Hohlraum in Verbindung stehenden Hohlraumabschnitt umschließt.

Die Eingriffsanordnung umfasst bevorzugt Eingriffsstrukturen, die formschlüssig ineinander greifen. Beispielsweise kann die Eingriffsanordnung durch eine Rastwulst an der einen Eingriffsstruktur und eine Rastnut an der anderen Eingriffsstruktur gebildet sein. Das Deckelelement wird dann unter formschlüssiger Verrastung der Rastwulst in der Rastnut auf das Verschlussgehäuse aufgeschnappt. Diese denkbar einfache Art der Befestigung des Deckelelements am Verschlussgehäuse erlaubt, insbesondere dann, wenn das Deckelgehäuse eine gewisse Elastizität besitzt, dennoch eine zuverlässige und insbesondere fluiddichte Verbindung zwischen Deckelelement und Verschlussgehäuse. Es ist insbesondere vorteilhaft, wenn die Rastnut an dem Koppelabschnitt des Verschlussgehäuses ausgebildet ist und die zugeordnete Rastwulst an dem Koppelabschnitt des Deckelelements ausgebildet ist.

Bevorzugt geht der Koppelabschnitt des Deckelgehäuses in einem Winkel in eine die Öffnung überdeckende Deckelwand über, so dass der Koppelabschnitt von dem in die Öffnung eingesetzten Deckelelement zur Außenseite des Behältnisses hin absteht. An dem Übergang des Koppelabschnitts zu der Deckelwand kann eine nach außen vorstehende, d.h. die Deckelwand zum Rand der Öffnung hin verlängernde, Wulst ausgebildet sein, die in der Verschlussstellung des Deckelelements in Anlage mit dem Rand der Öffnung gelangt. Die Wulst ist vorzugsweise um dem Umfang des Deckelelements umlaufend ausgebildet und bildet damit einen radial nach außen vorstehenden Ringabschnitt des Deckelelements. Liegt dieser Ringabschnitt in der Verschlussstellung am Rand der Öffnung an, so kann in besonders einfacher Weise eine den ersten Hohlraum luftdicht abschließende Anlage erreicht werden.

Der Koppelabschnitt ist zumindest in der Verschlussstellung des Deckelelements in einem spitzen Winkel oder im Wesentlichen rechtwinklig zur Deckelwand angeordnet. Er steht somit, wie bereits angesprochen, von der Deckelwand nach außen ab und kann an seinem freien Ende mit dem Verschlussgehäuse gekoppelt werden.

Die Erfindung betrifft ferner ein Behältnis, umfassend eine Verschlussanordnung der vorangehend beschriebenen Art. Das Behältnis ist bevorzugt als ein im Wesentlichen zylinderförmiges Röhrchen ausgebildet, wobei sich die Öffnung an einem der Stirnenden befindet. Darüber hinaus kann vorgesehen sein, dass sich das Behältnis an dem Stirnende, an dem sich die Öffnung befindet, zum Stirnende hin nach außen erweitert. Der sich erweiternde Abschnitt kann beispielsweise kegelstumpfförmig oder auch trompetenförmig ausgebildet sein. Es kann darüber hinaus an diesem Stirnende ein von der Begrenzungswand des Behältnisses nach innen vorstehender Vorsprungsabschnitt ausgebildet sein, an dem im Verschlusszustand ein Randabschnitt des Deckelelements zur Anlage kommt. Der Vorsprungsabschnitt erstreckt sich vorzugsweise um den gesamten Umfang der Zylinderfläche bzw. der sich zum Stirnende hin nach außen erweiternden Mantelfläche des Behältnisses.

Erfindungsgemäß ist weiterhin bevorzugt vorgesehen, dass das Behältnis zur Aufbewahrung von Flüssigkeiten, insbesondere von zu pipettierenden Flüssigkeiten und insbesondere von biochemischen Flüssigkeiten, ausgebildet ist.

Die Erfindung wird im Folgenden anhand eines bevorzugten Ausführungsbeispiels unter Bezugnahme auf die angefügten Zeichnungen näher erläutert. Es zeigt:
- Fig. 1: eine schematische Querschnittsansicht eines Röhrchens zur Aufbewahrung von Flüssigkeiten mit einer an seinem Stirnende aufgesetzten Verschlussanordnung gemäß einer Ausführungsform der vorliegenden Erfindung,
- Fig. 2: eine weitere Querschnittsansicht des in Fig. 1 gezeigten Röhrchens mit aufgesetzter Verschlussanordnung in einem Zustand, in welcher das Betätigungsglied einer Pipettiervorrichtung in einer Aufnahme des Verschlussgehäuses aufgenommen ist, und
- Fig. 3: eine weitere schematische Ansicht des Röhrchens gemäß Fig. 1 und 2, wobei nunmehr sich das Deckelelement in seiner Freigabestellung befindet und von dem Stirnende des Röhrchens abgenommen ist.

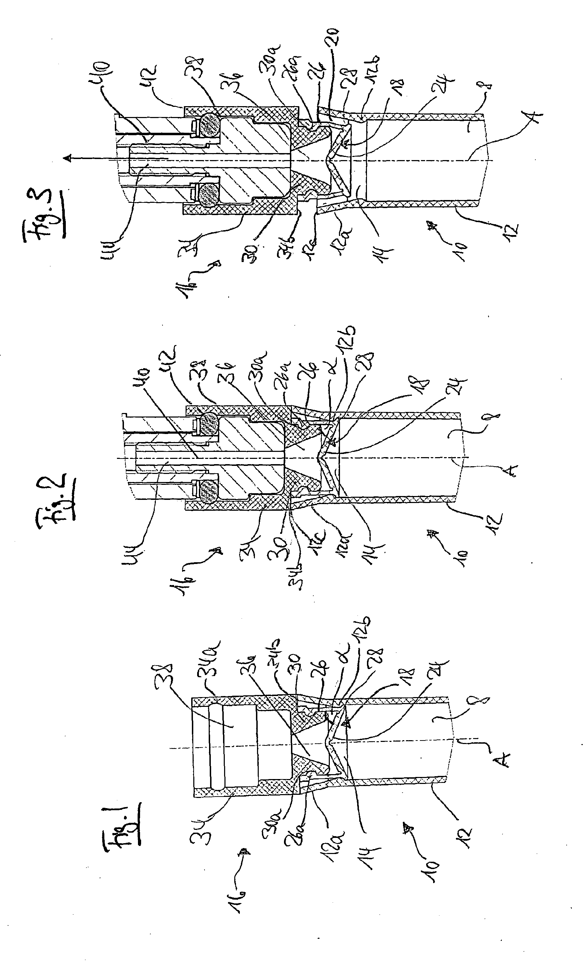

In Fig. 1 bis 3 ist ein im Wesentlichen zylinderförmiges Behältnis zur Aufbewahrung von insbesondere biochemischen Flüssigkeiten in einem Ausschnitt um eines seiner Stirnenden schematisch dargestellt und allgemein mit 10 bezeichnet. Das Behältnis 10 ist gebildet durch eine im Wesentlichen zylinderförmige Wand 12, die einen ersten Hohlraum 8 zur Aufbewahrung einer Flüssigkeit umgibt. Die Wand 12 erweitert an sich an ihrem einen Stirnende 12a kegelstumpfförmig. Die Wand 12 kann beispielsweise aus Glas oder einem Kunststoffmaterial gebildet sein. Auf das Stirnende des Behältnisses 10 ist eine Verschlussanordnung 16 aufgesetzt.

An dem in Fig. 1 bis 3 gezeigten Stirnende weist das Behältnis 10 eine Öffnung 14 mit kreisförmigem Rand auf, durch die Flüssigkeit in das Behältnis 10 einführbar ist oder aus dem Behältnis 10 entnehmbar ist. In Fig. 1 und 2 ist die Öffnung 14 durch ein Deckelelement 18 der Verschlussanordnung 16 gegenüber Austritt der im Behältnis 10 gespeicherten Flüssigkeit dicht verschlossen. In den Figuren 1 und 2 befindet sich das Deckelelement 18 daher in seinem Verschlusszustand.

Demgegenüber zeigt Fig. 3 einen Zustand, in dem in dem Behältnis 10 gespeicherte Flüssigkeit durch die Öffnung 14 in die Umgebung austreten kann, da zwischen dem Deckelelement 18 und der Wand 12 des Behältnisses nunmehr ein Spalt 20 gebildet ist. Das in Fig. 3 abgebildete Deckelelement 18 befindet sich daher in einer Freigabestellung, in der es aus der Öffnung 14 entnommen werden kann.

Das Deckelelement 18 umfasst eine zentrale Deckelwand 24, die sich im Wesentlichen quer zu der Zylinderachse A erstreckt, sowie einen sich daran anschließenden Koppelabschnitt 26, der, zumindest in dem Fig. 1 und 2 gezeigten Verschlusszustand, sich im Wesentlichen ringförmig und parallel zu der Wand 12 des Behältnisses 10 erstreckt. Die Deckelwand 24 und der Koppelabschnitt 26 stehen, zumindest in dem Verschlusszustand gemäß Fig. 1 und 2, in einem spitzen Winkel α aufeinander.

Am Übergang zwischen der Deckelwand 24 und dem Koppelabschnitt 26 verlängert sich die Deckelwand 24 radial nach außen zu einem ringförmigen Anlageabschnitt 28. Dieser Anlageabschnitt 28 des Deckelelements 18 liegt in der Verschlussstellung, wie in Fig. 1 und 2 gezeigt ist, an einem radial nach innen vorstehenden Vorsprung 12b der Wand 12 des Behältnisses an.

An seinem freien Ende ist der Koppelabschnitt 26 mit einer radial nach innen vorstehenden ringförmigen Wulst 26a ausgebildet. Die Wulst 26a steht in formschlüssigem Eingriff mit einer komplementären Ringnut 30a, die in dem Außenumfang eines axial zum Deckelelement 18 hin vorstehenden Abschnitts 30a eines Verschlussgehäuses 34 ausgebildet ist. Das Verschlussgehäuse 34 umschließt mit seinem axial vorstehenden Abschnitt 30 einen im Wesentlichen kegelstumpfförmigen Hohlraumabschnitt 36, der auf der von dem Deckelelement 18 abgewandten Seite in eine Aufnahme 38 mündet.

Die Aufnahme 38 ist zu der von dem Deckelelement 18 in axialer Richtung abgewandten Seite hin offen und an ihrem Innenumfang derart strukturiert, dass ein am Arm einer automatisierten Pipettiervorrichtung ausgebildetes Betätigungsglied 40 (s. Fig. 2 und 3) von dem dem Deckelelement 18 abgewandten Ende her in die Aufnahme 38 einführbar ist und in einer in Fig. 2 gezeigten Andockstellung fluiddicht in der Aufnahme 38 fixierbar ist, wie durch die in Fig. 2 und 3 gezeigte O-Ringdichtung 42 angedeutet ist. Die O-Ringdichtung 42 liegt in der Andockstellung des Betätigungsglieds 40 gemäß Fig. 2 und 3 luftdicht an einer in der Umfangswand des Verschlussgehäuses 34 ausgebildeten Ringnut 34a (s. Fig. 1) an. Nach erfolgtem Einfahren und luftdichtem Fixieren des Betätigungsglieds 40 in der Aufnahme 38 steht damit ein in dem Betätigungsglied 40 ausgebildeter Pipettierkanal 44, der einen zweiten Hohlraum im Sinne der vorliegenden Erfindung bildet, über den Hohlraumabschnitt 36 in Fluidverbindung mit der von dem ersten Hohlraum 8 abgewandten Seite des Deckelelements 18.

Das Deckelelement 18 ist aus einem weichelastischen Material gebildet, beispielsweise aus Naturkautschuk, einem synthetischen Kautschukmaterial auf Grundlage von Silikon oder aber einem geeigneten thermoplastischen Elastomer. Im Gegensatz hierzu ist das Verschlussgehäuse 34 samt seinem vorstehenden Abschnitt 30 aus einem harten thermoplastischen Kunststoffmaterial, beispielsweise Polyethylen (PE), Polypropylen (PP) oder Polyamid (PA) gebildet. Dennoch sind das Deckelelement 18 und das Verschlussgehäuse 34 fluiddicht miteinander verbunden, und zwar, indem das weichelastische Deckelelement 18 über den Außenumfang des vorstehenden Abschnitts 30 des Verschlussgehäuses 34 gezogen ist und mit seiner Ringwulst 36a formschlüssig in die Ringnut 30a einschnappt.

Erzeugt man daher nach Einfahren des Betätigungsglieds 40 in die Aufnahme 38 und fluiddichtem Arretieren desselben in der Aufnahme 38 einen Unterdruck in dem Pipettierkanal 44, so führt dieser Unterdruck zu einer Verformung des weichelastischen Deckelelements 18, insbesondere im Bereich der Deckelwand 24 und des Übergangs der Deckelwand 24 in den Koppelabschnitt 26. Der Bereich des Koppelabschnitts 26 in der Nähe der Ringwulst 26a wird dennoch weiterhin durch den vorstehenden Abschnitt 30 des Verschlussgehäuses 34, welcher sich nicht verformt, abgestützt, so dass mit zunehmenden Unterdruck im Pipettierkanal 44 lediglich die am Übergang zwischen der Deckelwand 24 und dem Koppelabschnitt 26 ausgebildete Ringwulst 28 sich zunehmend auf die Achse A zu bewegt und somit außer Anlage mit der Behältniswand 12 kommt. Es entsteht daher der in Fig. 3 gezeigte Zustand, in welchem der Spalt 20 zwischen dem Deckelelement 18 und der Wand 12 des Behältnisses 10 gebildet ist und schließlich die Ringwulst 28 soweit nach innen verlagert ist, dass sie am Vorsprung 12a vorbei bewegt werden kann und das Deckelelement 18 aus der Öffnung 14 in Fig. 3 nach oben abgezogen werden kann.

Zum Aufsetzen dieser Verschlussanordnung auf ein Behältnis 10 geht man genau umgekehrt vor: Zunächst wird das Betätigungsglied 40 in die Aufnahme 38 der Verschlussanordnung 16 eingefahren und fluiddicht arretiert. Dann erzeugt man einen Unterdruck in dem Pipettierkanal 44, bis sich das Deckelelement 18 soweit verformt, dass es in die Öffnung 14 eines zu verschließenden Behältnisses 10 eingefahren werden kann. Sobald das Verschlussgehäuse 34 an einem nach außen auskragenden Vorsprungsabschnitt 34b in Anlage mit dem Stirnende 12c der Wand 12 des Behältnisses 10 gelangt, kann der Unterdruck im Pipettierkanal 44 freigegeben werden, so dass sich das Deckelelement 18 schließlich in seine in Fig. 2 gezeigte Verschlussstellung entspannt, in welcher die Ringwulst 28 in dichtender Anlage an dem radial nach innen vorstehenden Vorsprung 12b der Wand 12 des Behältnisses 10 anliegt.

In der Verschlussstellung wird das Deckelelement 18 durch den Vorsprung 12b an einer Bewegung in axialer Richtung nach außen gehindert und gleichzeitig durch die Anlage des Vorsprungsabschnitts 34b des Verschlussgehäuses 34 an der Stirnwand 12c der Behältniswand 12 an einer Verlagerung in axialer Richtung nach innen gehindert. Es bleibt somit sicher in seiner Verschlussstellung. Dieser Effekt kann noch dadurch verstärkt werden, dass zwischen dem Vorsprungsabschnitt 34b und der Ringwulst 28 eine gewisse Spannung in axialer Richtung ausgeübt wird, wenn sich das Deckelelement 18 in seiner Verschlussstellung befindet. Damit kann nunmehr die Ankopplung des Betätigungsglieds 40 in der Aufnahme 38 gelöst werden (hierzu ist das Betätigungsglied 40 mit einem Mechanismus ausgestattet, wie er auch zum Abwerfen von Pipettenspitzen verwendet wird und beispielsweise in der EP 1 171 240 B2 offenbart ist) und aus der Aufnahme 38 ausgefahren werden. Die Öffnung 14 bleibt so lange zuverlässig verschlossen, bis auf der vom ersten Hohlraum 8 abgewandten Seite des Deckelelements 18 erneut ein Unterdruck erzeugt wird.

## Patentansprüche

1. Verschlussanordnung (16) für ein Behältnis (10), welches einen ersten Hohlraum (8) zur Aufbewahrung von Substanzen aufweist,
umfassend ein Deckelelement (18), das in eine mit dem ersten Hohlraum (8) in Verbindung stehende Öffnung (14) des Behältnisses (10) einsetzbar ist,
wobei das Deckelelement (18) in Fluidverbindung mit einem zweiten Hohlraum (44) bringbar ist, in dem ein vom ersten Hohlraum (8) verschiedener Druck erzeugbar ist und
wobei das in die Öffnung (14) eingesetzte Deckelelement (18) nach Maßgabe der Druckdifferenz zwischen dem ersten Hohlraum (8) und dem zweiten Hohlraum (44) zwischen einer Verschlussstellung, in der es die Öffnung (14) verschließt, und wenigstens einer Freigabestellung überführbar ist.

2. Verschlussanordnung (16) nach Anspruch 1,
wobei das Deckelelement (18) eine Dichtlippe (28) umfasst, die in der Verschlussstellung in dichtende Anlage mit einem um die Öffnung (14) umlaufenden Dichtrand (12b) des Behältnisses (10) bringbar ist.

3. Verschlussanordnung (16) nach Anspruch 1 oder 2,
wobei das Deckelelement (18) in Reaktion auf die Erzeugung einer Druckdifferenz zwischen dem ersten (8) und dem zweiten Hohlraum (44) seine Querschnittsfläche so weit verkleinert, dass das Deckelelement (18) an einem den kleinsten Querschnitt der Öffnung (14) definierenden Rand vorbei bewegt werden kann.

4. Verschlussanordnung (16) nach einem der Ansprüche 1 bis 3,
wobei die Öffnung (14) einen Rand aufweist, der einen zur Mitte der Öffnung vorstehenden Vorsprung (12b) bildet, an dessen dem ersten Hohlraum (8) zugewandter Innenseite in der Verschlussstellung ein Randabschnitt (28) des Deckelelements (18) anliegt.

5. Verschlussanordnung (16) nach einem der Ansprüche 1 bis 4,
wobei das Deckelelement (18) eine sich nach Maßgabe der Druckdifferenz zwischen dem ersten Hohlraum (8) und dem zweiten Hohlraum (44) verformende Dichtmembran (24) aus einem weichelastischen Kunststoffmaterial umfasst.

6. Verschlussanordnung (16) nach Anspruch 5,
wobei das Kunststoffmaterial ausgewählt ist aus der Gruppe, umfassend Naturkautschuk, synthetischer Kautschuk, insbesondere SilikonKautschuk, thermoplastische Elastomere oder Mischungen derselben.

7. Verschlussanordnung (16) nach einem der Ansprüche 1 bis 6,
wobei die Verschlussanordnung (16) ein Verschlussgehäuse (30, 34) umfasst, an dem das Deckelelement (18) angebracht ist, wobei das Deckelelement (18) über einen von dem Verschlussgehäuse (30, 34) umschlossenen Raum (36) in Fluidverbindung mit dem zweiten Hohlraum (44) bringbar ist.

8. Verschlussanordnung (16) nach Anspruch 7,
wobei das Verschlussgehäuse (30, 34) aus einem harten Material hergestellt ist.

9. Verschlussanordnung (16) nach Anspruch 8,
wobei das Verschlussgehäuse (30, 34) ein thermoplastisches Kunststoffmaterial umfasst, das ausgewählt ist aus der Gruppe, umfassend Polyethylen (PE), Polypropylen (PP), Polyamid (PA) oder Mischungen derselben.

10. Verschlussanordnung (16) nach einem der Ansprüche 7 bis 9,
wobei das Verschlussgehäuse (30, 34) eine zu einer von dem Deckelelement (18) abgewandten Seite hin offene Aufnahme (38) umschließt, in die ein Betätigungsglied (40) einer Flüssigkeitsdosiervorrichtung einfahrbar ist, wobei die Aufnahme (38) eine Koppelanordnung umfasst, durch die das Betätigungsglied (40) in der Aufnahme (38) fluiddicht fixierbar und eine Fluidverbindung zwischen dem zweiten Hohlraum (44) und der vom ersten Hohlraum (8) abgewandten Seite des Deckelelements (18) herstellbar ist.

11. Verschlussanordnung (16) nach einem der Ansprüche 7 bis 10,
wobei eine Eingriffsanordnung (26a, 30a) vorgesehen ist, durch die das Deckelelement (18) an dem Verschlussgehäuse (30, 34) angebracht ist, wobei die Eingriffsanordnung eine erste Eingriffsstruktur (26a) umfasst, die an einem Koppelabschnitt (26) des Deckelelements (18) ausgebildet ist, und eine zweite Eingriffsstruktur (30a) umfasst, die an dem Verschlussgehäuse (30, 34) ausgebildet ist, und wobei die erste Eingriffsstruktur (26a) nach Anbringung des Deckelelements (18) an dem Verschlussgehäuse (30, 34) in fluiddichtem Eingriff mit der zweiten Eingriffsstruktur (30a) steht.

12. Verschlussanordnung (16) nach Anspruch 11,
wobei der Koppelabschnitt (26) des Deckelelements (18) einen in einem Zustand, in dem das Deckelelement (18) in die Öffnung (14) eingesetzt ist, um die Öffnung (14) umlaufenden Mantelabschnitt (26) umfasst, wobei die erste Eingriffsstruktur (26a) an einem Innenumfang des Mantelabschnitts (26) ausgebildet ist und die zweite Eingriffsstruktur (30a) am Außenumfang eines in den Mantelabschnitt (26) eingesetzten Koppelabschnitts (39) des Verschlussgehäuses (30, 34) ausgebildet ist und wobei ferner der Koppelabschnitt (30) des Verschlussgehäuses (30, 34) einen mit dem zweiten Hohlraum (44) in Verbindung stehenden Hohlraumabschnitt (36) umschließt.

13. Verschlussanordnung (16) nach Anspruch 11 oder 12,
wobei die Eingriffsanordnung eine Rastwulst (26a) an der einen Eingriffsstruktur und eine Rastnut (30a) an der anderen Eingriffsstruktur umfasst, wobei die Rastwulst (26a) formschlüssig in die Rastnut (30a) einrastbar ist.

14. Verschlussanordnung (16) nach Anspruch 13,
wobei die Rastnut (30a) an dem Koppelabschnitt (30) des Verschlussgehäuses (30, 34) ausgebildet ist und die Rastwulst (26a) an dem Koppelabschnitt (26) des Deckelelements (18) ausgebildet ist.

15. Verschlussanordnung (16) nach einem der Ansprüche 11 bis 14,
wobei der Koppelabschnitt (26) des Deckelabschnitts (18) in einem Winkel (α) in eine die Öffnung (14) überdeckende Deckelwand (24) übergeht und wobei an dem Übergang des Koppelabschnitts (26) des Deckelelements (18) zu der Deckelwand (24) eine nach außen vorstehende Wulst (28) ausgebildet ist.

16. Verschlussanordnung (16) nach Anspruch 15,
wobei der Koppelabschnitt (26) zumindest im Verschlusszustand des Deckelelements (18) in einem spitzen Winkel (α) oder im Wesentlichen rechtwinklig zu der Deckelwand (24) angeordnet ist.

17. Behältnis (10), umfassend eine Verschlussanordnung (16) nach einem der vorangehenden Ansprüche.

18. Behältnis (10) nach Anspruch 17,
wobei das Behältnis (10) als im Wesentlichen zylinderförmiges Röhrchen ausgebildet ist, wobei sich die Öffnung (14) an einem der Stirnenden befindet.

19. Behältnis (10) nach Anspruch 17 oder 18,
wobei das Behältnis (10) sich an dem an dem Stirnende (12a), an dem sich die Öffnung (14) befindet, zum Stirnende hin nach außen erweitert.

20. Behältnis (10) nach einem der Ansprüche 17 bis 19,
wobei das Behältnis (10) zur Aufbewahrung von biochemischen Flüssigkeiten ausgebildet ist.
